# EUROPEAN PATENT APPLICATION

(11) **EP 2 538 743 A1**
(43) Date of publication of application: **26.12.2012**
(21) Application number: 11742358.2
(22) Date of filing: 15.02.2011
(51) Int. Cl.: H04W 74/08, H04W 72/04

(54) **MOBILE STATION AND WIRELESS BASE STATION**

(30) Priority: 15.02.2010 JP 2010030752
(71) Applicant: NTT DOCOMO, INC., Chiyoda-ku Tokyo 100-6150 (JP)
(72) Inventor: UMESH, Anil, Tokyo 100-6150 (JP); IWAMURA, Mikio, Tokyo 100-6150 (JP); MIKI, Nobuhiko, Tokyo 100-6150 (JP); KISHIYAMA, Yoshihisa, Tokyo 100-6150 (JP)
(74) Representative: HOFFMANN EITLE
(86) International application number: PCT/JP2011/053125
(87) International publication number: WO 2011/099619

(57) **Abstract**

A mobile station UE according to the present invention comprises an RACH procedure unit 12 configured to attempt to detect an RA response for an RA preamble only through a DL carrier corresponding to an UL carrier, from among a plurality of DL carriers, when the mobile station performs CA and has transmitted the RA preamble through the UL carrier.

## Description

### [Technical Field]

The present invention relates to a mobile station and a radio base station.

### [Background Art]

In an LTE (Long Term Evolution) FDD scheme, one DL (Downlink) carrier and one UL (Uplink) carrier form a pair. An LTE mobile communication system may be operated using a plurality of DL carriers and a plurality of UL carriers; however, the correspondence relation between the DL carriers and the UL carriers is one to one.

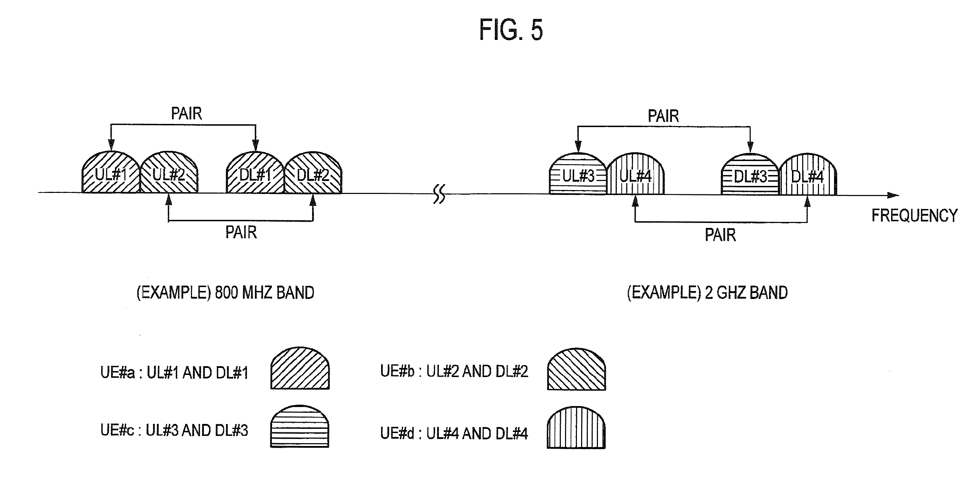

As illustrated in Fig. 5, a mobile station UE is configured to use only a pair of one DL carrier and one UL carrier at a time point at which the mobile station UE communicates with a radio base station eNB through a radio link.

The mobile station UE in an IDLE (standby) state is configured to select a standby DL carrier according to a cell selection operation defined in 3GPP TS36.304.

Then, the mobile station UE is configured to specify an UL carrier, which forms a pair with the DL carrier, from broadcast information (specifically, SIB2) in the standby DL carrier.

Here, on transition from the IDLE state to a CONNECTED (connection) state, the mobile station UE is configured to establish a radio link using the standby DL carrier and the UL carrier forming a pair with the DL carrier.

The radio base station eNB transmits a layer 3 (RRC: Radio Resource Control) message to a mobile station UE in the CONNECTED state to each mobile station UE at a predetermined timing, thereby changing a pair of a DL carrier and an UL carrier for establishing a radio link.

In the LTE scheme, an RACH procedure terminated in a layer 1/MAC sublayer has been defined. If the RACH procedure is performed, a mobile station UE transmits an RA preamble to a radio base station eNB through an uplink, and the radio base station eNB having detected the RA preamble transmits an RA response through a downlink. After transmitting the RA preamble, the mobile station UE attempts to detect the RA response (refer to Non Patent Literatures 2 and 3).

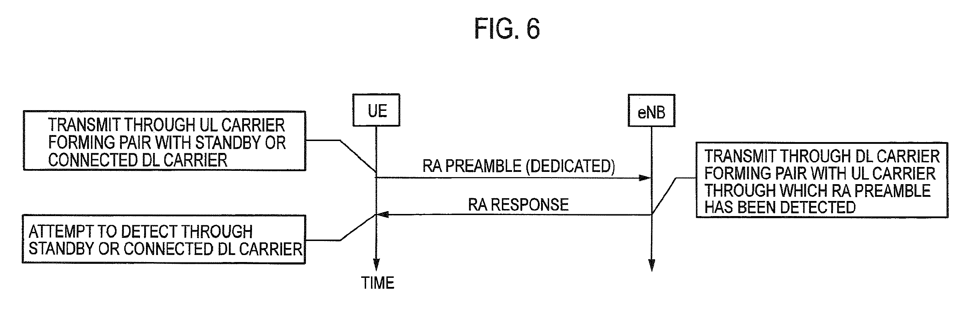

As illustrated in Fig. 6, the mobile station UE transmits the RA preamble through an UL carrier forming a pair with a standby DL carrier or a connected DL carrier, and attempts to detect the RA response through the standby DL carrier or the connected DL carrier.

Furthermore, as illustrated in Fig. 6, after the RA preamble is detected, the radio base station eNB transmits the RA response through the DL carrier forming a pair with an UL carrier through which the RA preamble has been detected.

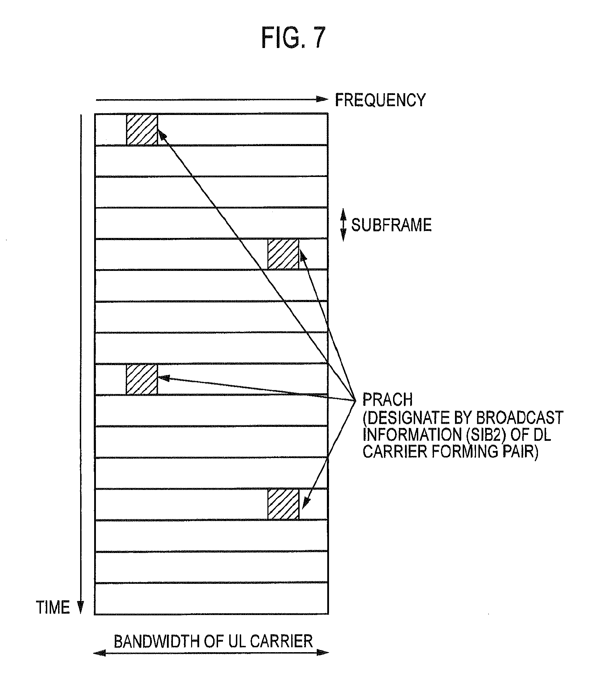

Furthermore, as illustrated in Fig. 7, broadcast information (SIB2) in the DL carrier includes "PRACH (Physical Random Access Channel) configuration (frequency-time resources for an RA preamble) in the UL carrier forming a pair with the DL carrier, and the mobile station UE is configured to transmit the RA preamble using the frequency-time resources designated by the "PRACH configuration".

The RA preamble includes 64 "preamble sequences" with different "cyclic shifts", and systematically, in one frequency-time resource of PRACH, it is possible to multiplex 64 RA preambles.

Moreover, in a system, the 64 preamble sequences may be classified into preamble sequences for Contention and preamble sequences for Contention free for use.

The preamble sequences for Contention denote preamble sequences selectable when the mobile station UE selects preamble sequences to be transmitted as the RA preamble, and the preamble sequences for Contention free denote preamble sequences which are not selectable when the mobile station UE selects the preamble sequences to be transmitted as the RA preamble, but are to be transmitted as the RA preamble when the preamble sequences are individually assigned by the radio base station eNB.

In addition, the preamble sequences for Contention free are assigned through PDCCH (Physical Downlink Control Channel) or an RRC message.

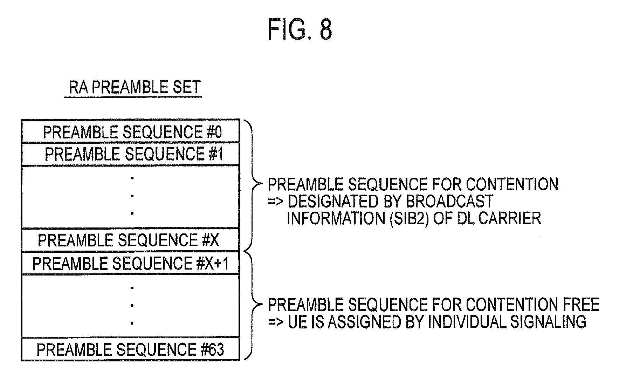

Here, as illustrated in Fig. 8, among the 64 preamble sequences, since a range of the preamble sequences for Contention is included in the broadcast information (SIB2) in the DL carrier, the mobile station UE may distinguish the preamble sequences for Contention from the preamble sequences for Contention free.

If detected RA preambles are the preamble sequences for Contention free, since the radio base station eNB individually assigns the preamble sequences to the mobile station UE, the radio base station eNB may specify a mobile station UE, to which the RA response is to be transmitted, at the transmission time point of the RA response.

Meanwhile, if the detected RA preambles are the preamble sequences for Contention, since the preamble sequences are preamble sequences selected by a mobile station UE, the radio base station eNB may not specify a mobile station UE, to which the RA response is to be transmitted, at the transmission time point of the RA response.

A resource on PDSCH (Physical Downlink Shared Channel) for transmitting the RA response is designated through PDCCH CRC-masked by RA-RNTI (Random Access-Radio Network Temporary Identifier).

Therefore, in order to detect the RA response, the mobile station UE having transmitted the RA preamble attempts to detect the PDCCH CRC-masked by the RA-RNTI.

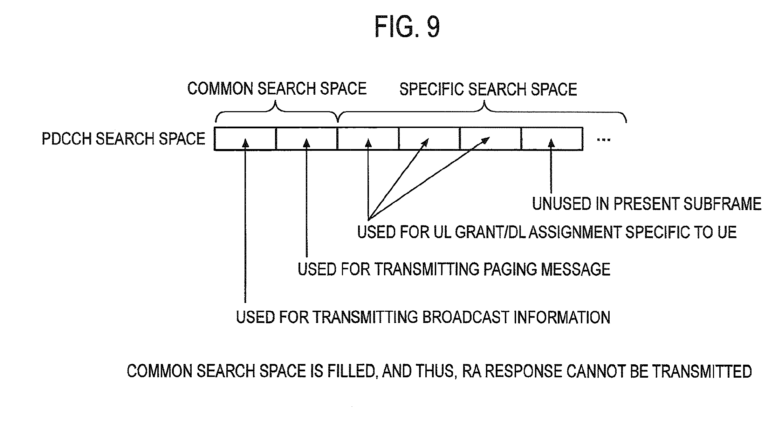

As illustrated in Fig. 9, resources for detecting the PDCCH are called "search spaces", and the radio base station eNB transmits the PDCCH CRC-masked by the RA-RNTI through a "common search space" fixed to a system among the search spaces.

Search spaces, other than the common search space, are available for the transmission of the PDCCH, which is used to individually assign an "UL grant" or a "DL assignment" to each mobile station UE, as a "UE specific search space".

Here, there is a problem that since the common search space is small, PDCCH resource shortage may relatively easily occur in the common search space.

If PDCCH resources on the common search space are filled, the radio base station eNB may not transmit the RA response, so that the completion of the RACH procedure is delayed.

In addition, another PDCCH transmitted on the common search space includes PDCCH (PDCCH CRC-masked by SI-RNTI) for notifying resource assignment of broadcast information, PDCCH (PDCCH CRC-masked by P-RNTI) for notifying resource assignment of a Paging (incoming) message, and the like.

Meanwhile, in order to further improve frequency use efficiency, improve peak throughput, and reduce transmission delay in the LTE scheme, an LTE-A scheme has been discussed in the 3GPP and the specification work thereof is under progress.

The main function of the LTE-A scheme is to improve user throughput (CA: Carrier Aggregation) by simultaneously setting a plurality of DL carriers and a plurality of UL carriers in one mobile station UE, and performing communication (refer to Non Patent Literatures 2 and 4).

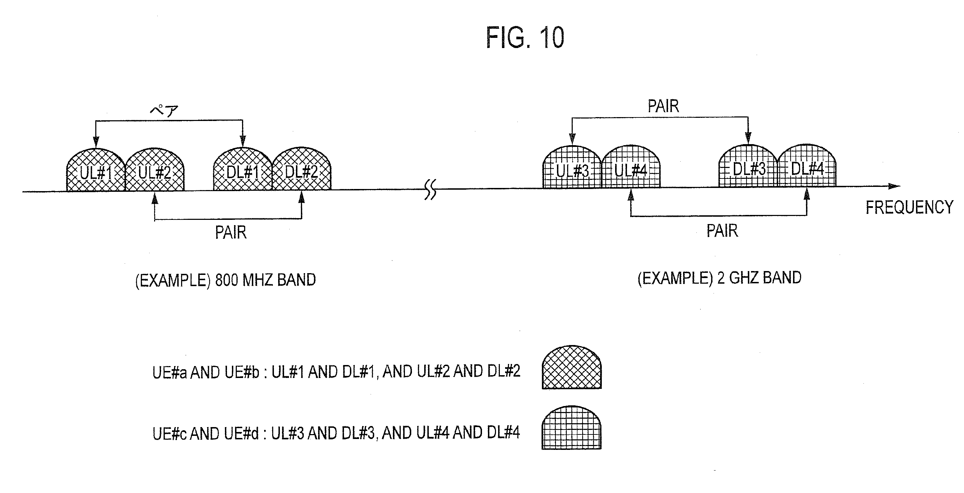

In addition, the LTE-A scheme has been discussed to be used as the same system while maintaining backward compatibility with the LTE scheme, and even in the case of applying CA as illustrated in Fig. 10, each DL carrier forms a pair with an UL carrier specified from broadcast information (SIB2) in the DL carrier.

As a scenario of the CA, there has been discussed a scenario in which the number of DL carriers and the number of UL carriers simultaneously used in a mobile station UE are asymmetrical to each other.

Particularly, since it is general that the user data traffic in a DL is higher than that in an UL, a scenario, in which the number of DL carriers provided as a system or the number of DL carriers supported as implementation of a mobile station UE is larger than the number of UL carriers, has been emphasized.

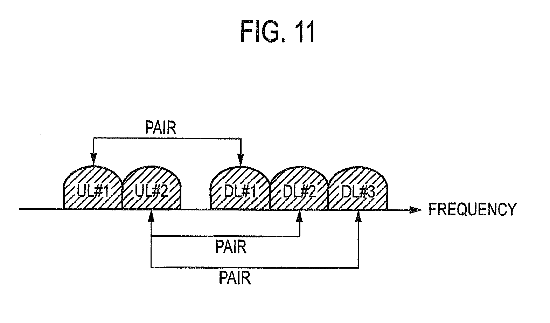

In this case, since the number of DL carriers is larger than the number of UL carriers, the relation between a DL carrier and an UL carrier specified from the broadcast information (SIB2) in the DL carrier may not only be N-to-one correspondence but also one-to-one correspondence as illustrated in Fig. 11.

### [Citation List]

### [Non Patent Literature]

[NPL 1] 3GPP TS36.304
[NPL 2] 3GPP TS36.300
[NPL 3] 3GPP TS36.321
[NPL 4] 3GPP TS36.912

### [Summary of Invention]

### [Technical Problem]

As described above, when considering the scenario of the CA in which the number of DL carriers is larger than the number of UL carriers, in order to reduce the aforementioned problem of the PDCCH resource shortage on the common search space, it is preferable to maximally distribute the transmission of the RA response to a plurality of DL carriers in a system.

For example, in Fig. 11, it is preferable to distribute an RA response for an RA preamble, which is transmitted through an UL carrier #2, to a DL carrier #2 and a DL carrier #3.

Furthermore, in the case in which a mobile station UE performing the CA performs reception through a plurality of DL carriers, when it is necessary to detect PDCCH through each DL carrier, processing ability required in the detection and combining of the PDCCH may increase in proportion to the number of DL carriers set in the mobile station UE, resulting in a problem of an increase in the implementation cost of the mobile station UE.

In this regard, even in the case of performing the CA, if possible, it is preferable to limit a DL carrier through which the mobile station UE detects the PDCCH.

Therefore, the present invention has been achieved in view of the above-described problems, and an object thereof is to provide a mobile station and a radio base station, by which it is possible to limit a DL carrier, through which a mobile station UE detects the PDCCH, in the case of performing CA.

### [Solution to Problem]

A first characteristic of the present embodiment is summarized in that a mobile station configured to perform communication with a radio base station using a plurality of carriers having different carrier frequencies, the mobile station comprising, an RACH procedure unit configured to attempt to detect an RA response for an RA preamble only through a downlink carrier corresponding to an uplink carrier from among a plurality of downlink carriers when the mobile station performs the communication and has transmitted the RA preamble through the uplink carrier.

A second characteristic of the present embodiment is summarized in that a radio base station comprising, an RACH procedure unit configured to transmit an RA response for an RA preamble only through a downlink carrier, which corresponds to an uplink carrier and at least one of a PRACH resource and a preamble sequence, when the RA preamble has been detected using the PRACH resource and the preamble sequence through the uplink carrier.

A third characteristic of the present embodiment is summarized in that a radio base station comprising, a transmission unit configured to transmit an dedicated RA preamble, and notification information for notifying an uplink carrier, through which a mobile station transmits the dedicated RA preamble, to the mobile station, the mobile station performing communication with the radio base station using a plurality of carriers having different carrier frequencies.

### [Advantageous Effects of Invention]

As described above, according to the present invention, it is possible to provide a mobile station and a radio base station, by which it is possible to limit a DL carrier, through which a mobile station UE detects the PDCCH, in the case of performing CA.

### [Brief Description of Drawings]

[Fig. 1] Fig. 1 is a diagram explaining a mobile communication system according to a first embodiment of the present invention.
[Fig. 2] Fig. 2 is a functional block diagram of a mobile station according to the first embodiment of the present invention.
[Fig. 3] Fig. 3 is a functional block diagram of a radio base station according to the first embodiment of the present invention.
[Fig. 4] Fig. 4 is a diagram explaining the mobile communication system according to the first embodiment of the present invention.
[Fig. 5] Fig. 5 is a diagram explaining a general mobile communication system.
[Fig. 6] Fig. 6 is a diagram explaining a general mobile communication system.
[Fig. 7] Fig. 7 is a diagram explaining a general mobile communication system.
[Fig. 8] Fig. 8 is a diagram explaining a general mobile communication system.
[Fig. 9] Fig. 9 is a diagram explaining a general mobile communication system.
[Fig. 10] Fig. 10 is a diagram explaining a general mobile communication system.
[Fig. 11] Fig. 11 is a diagram explaining a general mobile communication system.

### [Description of Embodiments]

### (Mobile communication system according to first embodiment of the present invention)

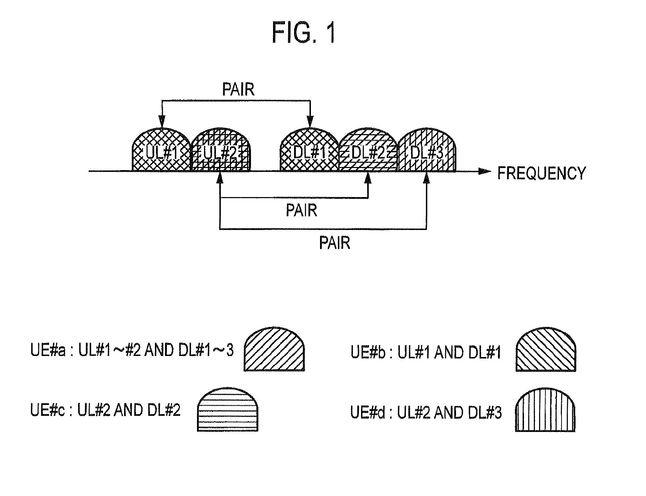

With reference to Fig. 1 to Fig. 4, the configuration of a mobile communication system according to a first embodiment of the present invention will be described.

As illustrated in Fig. 1, in the mobile communication system according to the present embodiment, two UL carriers and three DL carriers are provided. Furthermore, there exist a mobile station UE#a performing CA and mobile stations UE#b to UE#d performing no CA.

Moreover, it is assumed that resources for transmitting and receiving (transmission = a mobile station UE and reception = a radio base station eNB) an RA preamble have been set in an UL carrier #1 and an UL carrier #2, and "PRACH configurations" and "ranges of preamble sequences for Contention" are included in broadcast information (SIB2) in DL carriers corresponding to the two UL carriers.

Specifically, the "PRACH configuration" and the "range of preamble sequences for Contention" of the UL carrier #1 are broadcasted through the DL carrier #1, and the "PRACH configuration" and the "range of preamble sequences for Contention" of the UL carrier #2 are broadcasted through the DL carrier #2 and the DL carrier #3.

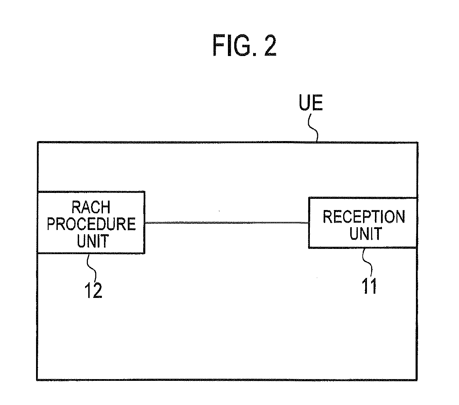

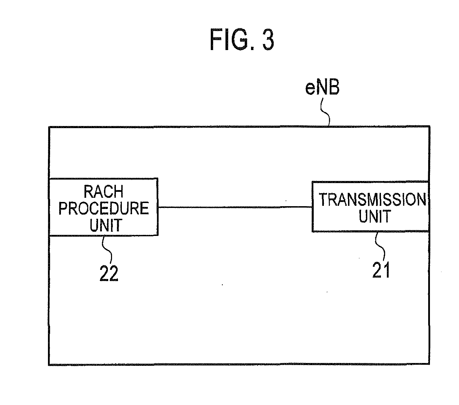

As illustrated in Fig. 2, the mobile station UE includes a reception unit 11 and an RACH procedure unit 12, and as illustrated in Fig. 3, the radio base station eNB includes a transmission unit 21 and an RACH procedure unit 22.

### <First Case>

Firstly, a description will be provided for the case in which the mobile station UE#a transmits an RA preamble for Contention (a common RA preamble) through the UL carrier #1.

In this case, the radio base station eNB may not specify a mobile station UE, which has transmitted the RA preamble through the UL carrier #1, at the detection time point of the RA preamble for Contention.

That is, in the example of Fig. 1, the radio base station eNB may not specify the mobile station UE#a or the mobile station UE#b, which has transmitted the RA preamble.

Even when the mobile station UE#a performing the CA attempts to detect an RA response through all the DL carriers #1 to #3, since the mobile station UE#b performing no CA attempts to receive the RA response only through the DL carrier #1, the radio base station eNB transmits the RA response through the DL carrier #1 forming a pair with the UL carrier #1 such that the RA response is received, even if the mobile station UE#b performing no CA has transmitted the RA preamble.

Thus, when the mobile station UE#a has transmitted the RA preamble for Contention through the UL carrier #1, since it is useless to attempt to detect the RA response through the DL carriers #2 and #3 not forming a pair with the UL carrier #1, it is sufficient if the mobile station UE#a detects the RA response only through the DL carrier #1.

Specifically, when the RACH procedure unit 12 of the mobile station UE has performed the CA and has transmitted the RA preamble (an RA preamble for Contention or an RA preamble for Contention free) through the UL carrier #1, the RACH procedure unit 12 is configured to attempt to detect the RA response for the RA preamble only through the DL carrier #1 corresponding to the UL carrier #1 from among the plurality of DL carriers #1 to #3.

That is, in this case, the RACH procedure unit 12 of the mobile station UE is configured not to attempt to detect the RA response through the DL carriers #2 and #3.

### <Second Case>

Secondly, a description will be provided for the case in which the mobile station UE#a transmits the RA preamble for Contention through the UL carrier #2.

In this case, the radio base station eNB may not specify a mobile station UE, which has transmitted the RA preamble through the UL carrier #2, at the detection time point of the RA preamble for Contention.

That is, in the example of Fig. 1, the radio base station eNB may not specify the mobile station UE#a, the mobile station UE#c, or the mobile station UE#d, which has transmitted the RA preamble.

Even when the mobile station UE#a performing the CA attempts to detect the RA response through all the DL carriers #1 to #3, since the radio base station eNB does not transmit the RA response through the DL carrier #1 not forming a pair with the UL carrier #2, the detection of the RA response by the mobile station UE#a through the DL carrier #1 is useless.

Meanwhile, the two DL carriers #2 and #3 form a pair with the UL carrier #2. Here, when considering that the mobile station UE#c performing no CA uses only the DL carrier #2 and the mobile station UE#d performing no CA uses only the DL carrier #3, it is necessary for the radio base station eNB to transmit the RA response through the DL carrier #2 and the DL carrier #3 such that the RA response is received, even if the mobile station UE#a, the mobile station UE#c, or the mobile station UE#d has transmitted the RA preamble.

However, actually, since one of the mobile station UE#a, the mobile station UE#c, and the mobile station UE#d has transmitted the RA preamble, double transmission of the RA response may cause a waste of the PDCCH resource on the common search space.

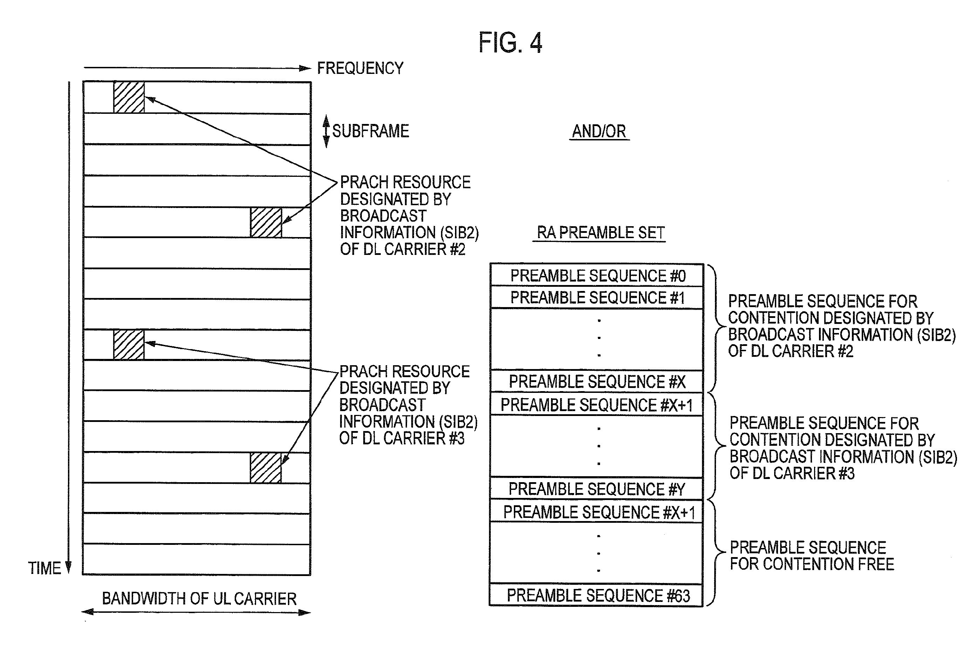

In this regard, as illustrated in Fig. 4, the radio base station eNB divides at least one of a PRACH resource in the UL carrier #2 and an RA preamble sequence for Contention into two for management, and broadcasts separate "PRACH configurations" and "ranges of preamble sequences for Contention" based on SIB2 through the DL carrier #2 and the DL carrier #3, thereby avoiding the waste.

In this case, since only the DL carrier #2 is used, when the mobile station UE#c transmits the RA preamble for Contention through the UL carrier #2, only a PRACH resource (a time-frequency resource of PRACH) of the UL carrier #2 designated by broadcast information (SIB2) in the DL carrier #2, and an RA preamble sequence for Contention are applied.

Similarly, since only the DL carrier #3 is used, when the mobile station UE#d transmits the RA preamble for Contention through the UL carrier #2, only the PRACH resource (the time-frequency resource of the PRACH) of the UL carrier #2 designated by broadcast information (SIB2) in the DL carrier #3, and the RA preamble sequence for Contention are applied.

Consequently, even when the RA preamble for Contention has been detected through the UL carrier #2, it is possible for the radio base station eNB to specify as to whether the RA preamble for Contention has been transmitted, according to the broadcast information in a particular DL carrier, thereby transmitting the RA response only through the DL carrier.

Furthermore, in this case, when the mobile station UE#a has transmitted the RA preamble for Contention through the UL carrier #2 using the time-frequency resource of the PRACH designated by the broadcast information in the DL carrier #2, and the preamble sequence, since attempting to detect the RA response through the DL carrier #3 is useless, it is sufficient if the mobile station UE#a detects the RA response only through the DL carrier #2.

### <Third Case>

Thirdly, a description will be provided for the case in which the mobile station UE#a transmits an RA preamble for Contention free (an dedicated RA preamble).

It is possible for the radio base station eNB to specify that the mobile station UE#a has transmitted the RA preamble, at the detection time point of the RA preamble for Contention free.

Here, in order to detect the RA response through all the DL carriers #1 to #3, if the mobile station UE#a attempts to detect the PDCCH CRC-masked by the RA-RNTI on the common search space, it is possible for the radio base station eNB to transmit the detected RA response for the RA preamble for Contention free from the mobile station UE#a through any one of the DL carriers #1 to #3.

At this time, it is possible for the radio base station eNB to select a DL carrier, which is to be used for the transmission of the RA response, based on the quality (for example, select a DL carrier with the smallest propagation loss) of each DL carrier at that time, the use state of PDCCH (for example, a DL carrier with the smallest number of PDCCH transmissions or a DL carrier with the smallest number of PDCCH transmissions on the common search space) in each DL carrier at that time, and the like.

Meanwhile, while the mobile station UE#a has attempted to detect the PDCCH CRC-masked by the RA-RNTI through all the DL carriers #1 to #3, since the radio base station eNB transmits the RA response through only one of the DL carriers #1 to #3, the mobile station UE#a uselessly detects the PDCCH CRC-masked by the RA-RNTI through the other two DL carriers, resulting in an increase in the implementation cost of the mobile station UE.

On the contrary, if the mobile station UE performing the CA determines in advance a DL carrier for waiting the RA response for the RA preamble for Contention free, it is possible for the mobile station UE to avoid the useless detection of the PDCCH CRC-masked by the RA-RNTI.

A plurality of methods thereof will be described as follows.

### <First Method>

Similarly to the case in which the RA preamble for Contention is transmitted, the radio base station eNB may be configured to transmit the RA response only through a DL carrier in which an UL carrier (or a frequency-time resource of an UL carrier and PRACH) having detected the RA preamble is designated by broadcast information (SIB2).

At this time, the radio base station eNB assigns the RA preamble for Contention free to the mobile station UE and simultaneously notifies an UL carrier (or a frequency-time resource of an UL carrier and PRACH) for permitting the transmission of the RA preamble for Contention free, thereby controlling total RA responses transmitted in a system to be distributed to DL carriers in the system.

For example, when the radio base station eNB assigns the RA preamble for Contention free to the mobile station UE#a such that the RA response for the RA preamble for Contention free from the mobile station UE#a is transmitted through the DL carrier #1, the radio base station eNB designates the UL carrier #1.

Furthermore, when the radio base station eNB assigns an RA preamble for Contention free to another mobile station UE#1 performing the CA, similarly to the mobile station UE#a, such that the RA response for the RA preamble for Contention free from the mobile station UE#1 is transmitted through the DL carrier #2, the radio base station eNB designates the UL carrier #2 and a frequency-time resource of PRACH included in broadcast information (SIB2) in the DL carrier #2.

Moreover, when the radio base station eNB assigns an RA preamble for Contention free to another mobile station UE#2 performing the CA, similarly to the mobile station UE#a, such that the RA response for the RA preamble for Contention free from the mobile station UE#2 is transmitted through the DL carrier #3, the radio base station eNB designates the UL carrier #2 and a frequency-time resource of PRACH included in broadcast information (SIB2) in the DL carrier #3.

As a consequence, it is possible to distribute a DL carrier for transmitting the RA response to a plurality of DL carriers used in the system.

Here, as a method for notifying the UL carrier (or the frequency-time resource of the UL carrier and the PRACH) for permitting the transmission of the RA preamble for Contention free, it is considered to notify information (for example, information on the center frequency of the DL carrier) for specifying the DL carrier in which the UL carrier (or the frequency-time resource of the UL carrier and the PRACH) is designated by the broadcast information (SIB2).

### <Second Method>

The radio base station eNB may be configured to notify the mobile station UE of a transmission place of the RA response for the RA preamble for Contention free in advance.

Specifically, the radio base station eNB notifies corresponding information through an RRC message in advance. The RRC message may be transmitted to the mobile station UE when the use of a plurality of DL carriers is instructed, when the mobile station UE performs a handover while a plurality of DL carriers is being used, and the like.

The radio base station eNB notifies a DL carrier for transmitting an RA response for an RA preamble for Contention free to be designated to a mobile station UE performing CA, thereby controlling total RA responses transmitted in the system to be distributed to a plurality of DL carriers used in the system.

For example, when the radio base station eNB may notify the mobile station UE#a of the fact that the RA response for the RA preamble for Contention free is to be transmitted through the DL carrier #1, may notify another mobile station UE#1 performing the CA, similarly to the mobile station UE#a, of the fact that the RA response for the RA preamble for Contention free is to be transmitted through the DL carrier #2, and may notify another mobile station UE#2 performing the CA, similarly to the mobile station UE#a, of the fact that the RA response for the RA preamble for Contention free is to be transmitted through the DL carrier #3.

As a consequence, the transmission of the RA response can be distributed to a plurality of DL carriers used in the system.

The characteristics of the aforementioned present embodiment can be expressed as follows.

A first characteristic of the present embodiment is summarized in that a mobile station UE, which is configured to perform communication (CA) with a radio base station eNB using a plurality of carriers having different carrier frequencies, includes an RACH procedure unit 12 configured to attempt to detect an RA response for an RA preamble only through a DL carrier (downlink carrier) corresponding to an UL carrier (uplink carrier) from among a plurality of DL carriers when the mobile station UE has performed the CA and transmitted the RA preamble through the UL carrier.

In the first characteristic of the present embodiment, the mobile station UE may include a reception unit 11 configured to receive broadcast information (SIB2) for designating the UL carrier, which corresponds to the DL carrier, through the aforementioned DL carrier.

In the first characteristic of the present embodiment, when the mobile station UE performs the CA and has transmitted the RA preamble through the UL carrier using a PRACH resource and a preamble sequence, the RACH procedure unit 12 may be configured to attempt to detect the RA response only through a DL carrier from among the plurality of DL carriers, which corresponds to the UL carrier and at least one of the PRACH resource and the preamble sequence.

In the first characteristic of the present embodiment, the mobile station UE may include the reception unit 11 configured to receive broadcast information (SIB2) for designating the UL carrier corresponding to the DL carrier and at least one of the PRACH resource and the preamble sequence through the aforementioned downlink carrier.

In the first characteristic of the present embodiment, the aforementioned RA preamble may include an "RA preamble for Contention (a common RA preamble)".

A second characteristic of the present embodiment is summarized in that a radio base station eNB includes an RACH procedure unit 22 configured to transmit an RA response for an RA preamble only through a DL carrier, which corresponds to an UL carrier and at least one of a PRACH resource and a preamble sequence, when the RA preamble has been detected using the PRACH resource and the preamble sequence through the UL carrier.

In the second characteristic of the present embodiment, the radio base station eNB may include a transmission unit 21 configured to transmit broadcast information (SIB2) for designating the UL carrier corresponding to the downlink carrier and at least one of the PRACH resource and the preamble sequence through the aforementioned DL carrier.

In the second characteristic of the present embodiment, the aforementioned RA preamble may include an "RA preamble for Contention".

A third characteristic of the present embodiment is summarized in that a radio base station eNB includes a transmission unit 21 configured to transmit an "RA preamble for Contention free (an dedicated RA preamble)", and notification information for notifying an UL carrier, through which a mobile station UE performing CA transmits the "RA preamble for Contention free", to the mobile station UE.

In the third characteristic of the present embodiment, the transmission unit 21 may be configured to transmit, as the aforementioned notification information, information for specifying a DL carrier designating the UL carrier by broadcast information.

In the third characteristic of the present embodiment, the transmission unit 21 may be configured to notify a PRACH resource, through which the mobile station UE transmits the "RA preamble for Contention free", by the aforementioned notification information, in addition to the aforementioned UL carrier.

In the third characteristic of the present embodiment, the transmission unit 21 may be configured to transmit, as the aforementioned notification information, information for specifying a DL carrier designating the UL carrier and the PRACH resource by broadcast information.

In the third characteristic of the present embodiment, the transmission unit 21 may be configured to transmit the aforementioned notification information by an RRC message.

It is noted that the operation of the above-described the mobile station UE or the radio base station eNB may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile station UE or the radio base station eNB. Further, such a storage medium or a processor may be arranged, as a discrete component, in the mobile station UE or the radio base station eNB.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile station and a radio base station, by which it is possible to limit a DL carrier, through which a mobile station UE detects the PDCCH, in the case of performing CA.

### [Reference Signs List]

UE ... Mobile station
11 ... Reception unit
12 ... RACH procedure unit
eNB ... Radio base station
21 ... Transmission unit
22 ... RACH procedure unit

## Claims

1. A mobile station configured to perform communication with a radio base station using a plurality of carriers having different carrier frequencies, the mobile station comprising:
an RACH procedure unit configured to attempt to detect an RA response for an RA preamble only through a downlink carrier corresponding to an uplink carrier from among a plurality of downlink carriers when the mobile station performs the communication and has transmitted the RA preamble through the uplink carrier.

2. The mobile station according to claim 1, comprising: a reception unit configured to receive broadcast information for designating the uplink carrier, which corresponds to the downlink carrier, through the downlink carrier.

3. The mobile station according to claim 2, wherein, when the mobile station performs the communication and has transmitted the RA preamble through the uplink carrier using a PRACH resource and a preamble sequence, the RACH procedure unit is configured to attempt to detect the RA response only through a downlink carrier from among the plurality of downlink carriers, which corresponds to the uplink carrier and at least one of the PRACH resource and the preamble sequence.

4. The mobile station according to claim 3, comprising: a reception unit configured to receive broadcast information for designating the uplink carrier corresponding to the downlink carrier and at least one of the PRACH resource and the preamble sequence, through the downlink carrier.

5. The mobile station according to claim 1, wherein the RA preamble includes a common RA preamble.

6. A radio base station comprising:
an RACH procedure unit configured to transmit an RA response for an RA preamble only through a downlink carrier, which corresponds to an uplink carrier and at least one of a PRACH resource and a preamble sequence, when the RA preamble has been detected using the PRACH resource and the preamble sequence through the uplink carrier.

7. The radio base station according to claim 6, further comprising: a transmission unit configured to transmit broadcast information for designating the uplink carrier corresponding to the downlink carrier and at least one of the PRACH resource and the preamble sequence through the downlink carrier.

8. The radio base station according to claim 6, wherein the RA preamble includes a common RA preamble.

9. A radio base station comprising:
a transmission unit configured to transmit an dedicated RA preamble, and notification information for notifying an uplink carrier, through which a mobile station transmits the dedicated RA preamble, to the mobile station, the mobile station performing communication with the radio base station using a plurality of carriers having different carrier frequencies.

10. The radio base station according to claim 9, wherein the transmission unit is configured to transmit, as the notification information, information for specifying a downlink carrier designating the uplink carrier by broadcast information.

11. The radio base station according to claim 9, wherein the transmission unit is configured to notify a PRACH resource, through which the mobile station transmits the dedicated RA preamble, by the notification information, in addition to the uplink carrier.

12. The radio base station according to claim 11, wherein the transmission unit is configured to transmit, as the notification information, information for specifying a downlink carrier designating the uplink carrier and the PRACH resource by broadcast information.

13. The radio base station according to claim 9, wherein the transmission unit is configured to transmit the notification information by an RRC message.
